# EUROPÄISCHE PATENTSCHRIFT

(11) **EP 1 734 627 B1**
(45) Veröffentlichungstag und Bekanntmachung des Hinweises auf die Patenterteilung: **03.04.2013**
(21) Anmeldenummer: 06007235.2
(22) Anmeldetag: 06.04.2006
(51) Int. Cl.: H02G 15/013, H02G 3/08

(54) **Dichtkörper für Kabeldurchführungen**
Sealing member for cable feedthrough
Corps d'étanchéité pour traversée de cable

(30) Priorität: 15.06.2005 DE 102005027771
(43) Veröffentlichungstag der Anmeldung: 20.12.2006
(73) Patentinhaber: Pflitsch GmbH & Co. KG., 42499 Hückeswagen (DE)
(72) Erfinder: Binder, Karlheinz, 42499 Hückeswagen (DE); Wetzels, Ralf, 42499 Hückeswagen (DE)
(74) Vertreter: Köchling, Conrad-Joachim

(56) Entgegenhaltungen:
- EP-A1- 0 531 172
- CH-A5- 682 784
- DE-C- 679 718
- FR-A1- 2 597 673
- GB-A- 1 404 646

## Beschreibung

Die Erfindung betrifft einen Dichtkörper für Kabeldurchführungen, bestehend aus mindestens zwei Teilkörpern, wobei die Teilkörper massiv sind und mit den einander zugewandten Flächen aufeinander liegen, wobei die so gebildete Schnittebene die Durchsteckebene für Kabel oder dergleichen flexible Langformteile bildet.

Im Stand der Technik sind Vorrichtungen zur Einführung von Kabeln, insbesondere auch vorkonfektionierten Kabeln, in Schaltschränke, Geräte oder dergleichen Bauteile bekannt. Ein solches Bauteil weist beispielsweise eine Einsatzöffnung, vorzugsweise eine rechteckige Einsatzöffnung, auf, wobei die Vorrichtung aus einer mehrteiligen Platte bestehen kann, die mindestens eine Öffnung zur Durchführung von Kabeln aufweist. Beispielsweise werden in rechteckige Ausschnitte des Gehäuses eines Bauteiles Platten eingesetzt und fixiert, die eine entsprechende Durchführungsöffnung für Kabel aufweisen. Eine solche Durchführung kann beispielsweise durch eine Bürstenleiste gebildet sein. Dies ermöglicht das Einführen von Kabeln, wobei allerdings keine Dichtfunktion und auch keine Zugentlastung erreicht wird. Es sind auch Ausbildungen bekannt, bei denen in einer Modulplatte, die in die entsprechende Einsatzöffnung eingesetzt wird, ein Moosgummiplattenteil mit Durchgangslochungen eingesetzt ist, so dass das Durchführen von Kabeln ermöglicht ist, wobei die Moosgummiplatten vorzugsweise mittig geteilt sind und die Teilungsfuge auch die Durchgangslochungen durchsetzt, so dass die Platte beispielsweise in zwei Teile mit jeweils einer halben Durchgangsöffnung zerlegt werden kann. In diese Plattenteile können dann die entsprechenden Kabel eingelegt werden, ohne dass die konfektionierten Teile stören, beispielsweise Stecker oder dergleichen, die am Kabel angeschlossen sind. Anschließend kann die zweite Plattenhälfte aufgesetzt werden, so dass das durchgeführte Kabel von der Öffnung umgriffen ist. Diese Platte wird dann in die Modulplatte eingesetzt, die wiederum in die Einsatzöffnung der Vorrichtung montiert wird. Bei einer solchen Ausbildung wird nur eine geringe Abdichtung und Zugentlastung erreicht.

Eine Ausgestaltung-gemäß Oberbegriff des Anspruches 1 ist beispielsweise aus der EP 0 531 172 A 1 und der DE 679 718 C bekannt.

Bei der in der EP geschilderten Lösung sind an einem stabilen Teilkörper Lamellen ausgebildet und/oder durch Schlitze in filigrane Einzelsegmente aufgeteilt, die die Durchführung eines entsprechenden Kabels ermöglichen, wobei das Kabel am Mantel relativ dicht umfasst wird. Eine Zugentlastung kann bei dieser Lösung nicht erreicht werden. Bei der Lösung, die in der deutschen Literaturstelle beschrieben ist, sind zwei Dichtungseinlagen vorgesehen, wobei mindestens eine der Dichtungseinlagen mit einer Einkerbung für eine Drahtdurchführung eines Kabels ausgebildet ist. Die andere kann ebenfalls mit einer solchen Kerbe ausgestattet sein oder aber ein entsprechender lamellenartiger Vorsprung dieser Dichtungseinlage stützt sich elastisch unter gleichzeitiger Verformung der Dichtleiste an dem Mantel des durchgeführten Kabels ab. Auch hierbei mag eine Abdichtung des Kabels erfolgen, jedoch wird keine Zugentlastung des Kabels erreicht, da für in Kabellängsrichtung auftretende Kräfte kein Widerhalt erzeugt ist.

Ausgehend von diesem Stand der Technik liegt der Erfindung die Aufgabe zu Grunde, einen Dichtkörper für Kabeldurchführungen gattungsgemäßer Art zu schaffen, der eine gute Abdichtung eines durchgeführten Kabels ermöglicht und zudem auch als Zugentlastung dienen kann.

Zur Lösung dieser Aufgabe schlägt die Erfindung vor, dass die die Schnittebene bildenden Flächen wellenartig und/oder mäanderartig und/oder ein Labyrinth bildend geformt und passend ineinander gefügt sind, wobei der Wellenverlauf und/oder Mäanderverlauf etwa gleichgerichtet zur geraden Durchsteckrichtung von Kabeln oder dergleichen Langformteilen gerichtet ist, um eine Zugentlastung zu bilden, indem die zwischen den Teilkörpern angeordneten Kabel oder dergleichen Langformteile beim Aneinanderpressen der Teilkörper entsprechend des Wellenverlaufes, des Mäanderverlaufes oder des Labyrinthverlaufes verformt werden, so dass sie sich in Zugrichtung einer auf das Kabel einwirkenden Zugkraft nicht gradlinig erstrecken, sondern gewellt oder abgewinkelt verlaufen.

Beispielsweise können die Teilkörper aus zwei quaderförmigen Teilelementen gebildet sein, die mit den einander zugewandten Flächen aufeinander liegen. In dieser so gebildeten Schnittebene ist die Durchsteckebene für Kabel oder dergleichen Langformteile gebildet. Solche Kabel können also zwischen die einander zugewandten Flächen eingebracht werden und mittels Teilkörper abgedichtet werden. Dadurch, dass die die Schnittebene bildenden Flächen wellenartig und/oder mäanderartig und/oder ein Labyrinth bildend geformt sind und passend ineinander gefügt sind, wenn die Teilkörper aufeinander gelegt sind, wird nicht nur eine gute Abdichtung erreicht, weil sich die Teilkörper des Dichtkörpers aneinander legen und die durchgeführten Kabel oder dergleichen umschließen, sondern es wird auch noch eine Zugentlastung erreicht, weil der Wellenverlauf und/oder der Mäanderverlauf beziehungsweise der Verlauf des Labyrinths etwa gleichgerichtet zur geraden Durchsteckrichtung von Kabeln oder dergleichen Langformteilen gerichtet ist, so dass die zwischen den Teilkörpern angeordneten Kabel oder dergleichen beim Aneinanderpressen der Teilkörper entsprechend des Wellenverlaufes, des Mäanderverlaufes oder des Labyrinthverlaufes verformt werden, so dass sie sich in Zugrichtung einer auf das Kabel einwirkenden Zugkraft nicht gradlinig erstrecken, sondern gewellt oder abgewinkelt verlaufen.

Insbesondere ist dabei bevorzugt vorgesehen, dass der Wellenverlauf und/oder Mäanderverlauf parallel zur Durchsteckrichtung gerichtet ist.

Auch kann vorgesehen sein, dass der Wellenverlauf und/oder Mäanderverlauf schräg, insbesondere diagonal zur Durchsteckrichtung gerichtet ist.

Insbesondere ist es auch möglich, mehrere solcher Dichtebenen übereinander auszubilden, wozu vorgesehen ist, dass mehrere Teilkörper aufeinander gefügt sind, wobei jeweils zwischen den benachbarten Flächen Labyrinthe, Wellen und/oder Mäander ausgebildet sind.

Dabei kann vorgesehen sein, dass benachbarte Wellen, Labyrinthe und/oder Mäander in einer Schnittebene und/oder in aufeinander folgenden Schnittebenen unterschiedliche Form, Wellenlänge, Tiefe, Höhe, Breite oder Länge aufweisen.

Um das Einlegen und Positionieren eines Kabels zu erleichtern, ist vorgesehen, dass quer zur Steckrichtung von Kabeln oder dergleichen Langformteilen/Querwellen in der Schnittebene der Teilkörper gebildet sind und vorzugsweise im Tal und/oder auf dem Berg einer Querwelle in Durchsteckrichtung der Kabel verlaufende Nuten ausgeformt sind.

Um eine gute Stützung und Zugentlastung zu erreichen und dennoch auch eine gute Abdichtung sicherzustellen, ist vorgesehen, dass die Teilkörper unterschiedliche Härte aufweisen.

Vorzugsweise ist vorgesehen, dass die Teilkörper aus elastischem Werkstoff, vorzugsweise Elastomer bestehen.

Alternativ kann auch vorgesehen sein, dass die Dichtkörper aus hartem Werkstoff bestehen und in der Schnittebene eine weichelastische Schicht einseitig oder beidseitig an den einander zugewandten Flächen der Teilkörper vorgesehen ist.

Zudem kann vorgesehen sein, dass der Dichtkörper von einem Spannrahmen oder einer anderen Spannvorrichtung umgeben ist, mittels derer die die Schnittebene bildenden Flächen der Teilkörper gegeneinander anpressbar sind.

Rahmenteile, die eine solche Spannung von Dichtkörpern ermöglichen sind beispielsweise aus der DE 94 14 666 U1 bekannt.

Die Erfindung stellt einen Dichtkörper für Kabeldurchführungen zur Verfügung, der besonders geeignet ist, eine feuchtedichte Anordnung von Kabeldurchführungen zu ermöglichen, wobei auch ein vorzügliches Haltevermögen, also eine gewisse Haltekraft gegen Zugkräfte erreicht ist, die auf ein im Dichtkörper eingespanntes Kabel einwirken. Sofern ein entsprechender oberer und unterer Teilkörper unterschiedlich hart ausgestaltet ist, werden einerseits die Auszugskräfte erhöht und andererseits die Dichtigkeit optimiert. Ein geeigneter Werkstoff für solche Dichtkörper ist beispielsweise thermoplastisches Elastomer.

Ausführungsbeispiele der Erfindung sind in der Zeichnung dargestellt und im Folgenden näher beschrieben. Es zeigt:
- Figur 1: eine erste Ausführungsform eines geteilten Dichtkörpers in Ansicht;
- Figur 2: drei Varianten in Stirnansicht;
- Figur 3: eine weitere Variante in Ansicht;
- Figur 4: eine weitere Variante ebenfalls in Ansicht;
- Figur 5: eine Variante mit den Dichtkörper umgebendem Spannrahmen in Ansicht.

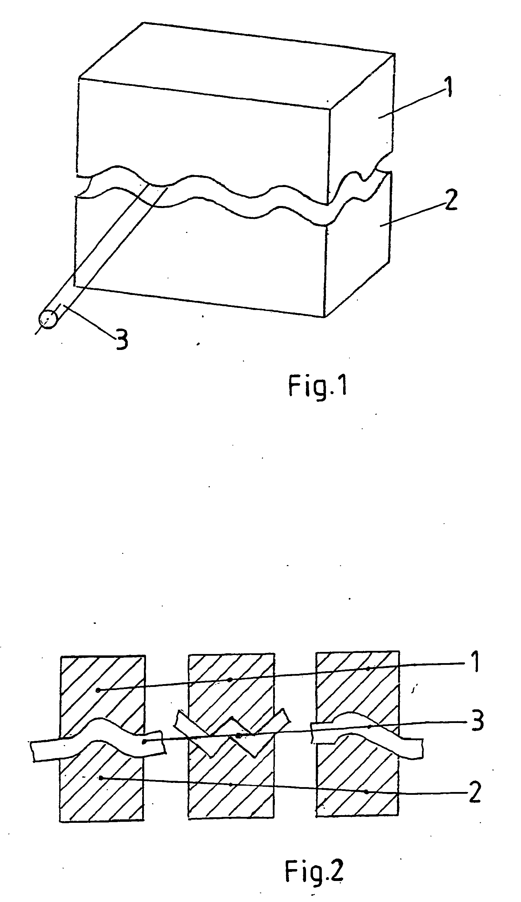

Wie beispielsweise in Figur 1 ersichtlich, ist ein Dichtkörper für Kabeldurchführungen vorgesehen, der aus zumindest zwei Teilkörpern 1, 2 besteht. Die Teilkörper sind formstabil und aus diesem Grunde vorzugsweise massiv. In der Solllage sind diese Teilkörper 1, 2 mit den einander zugewandten Flächen aufeinander gedrückt. In der Zeichnung sind die einander zugewandten Flächen voneinander beabstandet, um den Gegenstand der Erfindung zu verdeutlichen. Die Schnittebene, die durch die einander gegenüberliegenden Flächen der Teilkörper 1, 2 gebildet ist, ist dafür bestimmt, dass Kabel oder dergleichen durch diese Schnittebene geführt werden. Die die Schnittebene bildenden Flächen der Teilkörper 1, 2 sind wellenartig oder mäanderartig und/oder ein Labyrinth bildend geformt und passend ineinander gefügt, wobei der Wellenverlauf und/oder Mäanderverlauf oder dergleichen parallel zur geraden Durchsteckrichtung eines bei 3 angedeuteten Kabels oder dergleichen verläuft. Insbesondere an der rechten Stirnseite gemäß Abbildung in Figur 1 ist ersichtlich, dass sich über den Verlauf des durchgeführten Kabels 3 keine gerade Linie, sondern eine Wellenform oder dergleichen ergibt, wie auch aus den Darstellungen gemäß Figur 2 verdeutlicht ist. Sofern in der Montagesolllage die beiden Teilkörper 1, 2 aufeinander gepresst sind und sich unter elastischer Verformung an dem durchgeführten Kabel 3 abstützen, verläuft dieses Kabel 3 also nicht gradlinig, sondern entsprechend der Form der Wellen, Mäander oder dergleichen mehrfach gebogen oder gewinkelt. Hierdurch wird eine gewisse Zugentlastung gebildet, da auf das Kabel 3 einwirkende Zugkräfte eine Verschiebung des Kabels zwischen den Teilkörpern 1, 2 unterbindet oder dieser Bewegung zumindest entgegenwirkt. Vorzugsweise sind in der Solllage die Teilkörper 1, 2 in der Schnittebene dicht aufeinander gelegt, wobei sie unter elastischer Verformung das Kabel 3 umgeben.

Wie insbesondere in den Ausführungsbeispielen dargestellt, ist der Wellenverlauf oder Mäanderverlauf parallel zur Durchsteckrichtung ausgerichtet, so dass also das verlegte Kabel 3 oder dergleichen die entsprechende Wellenform annimmt und in diese gezwungen wird.

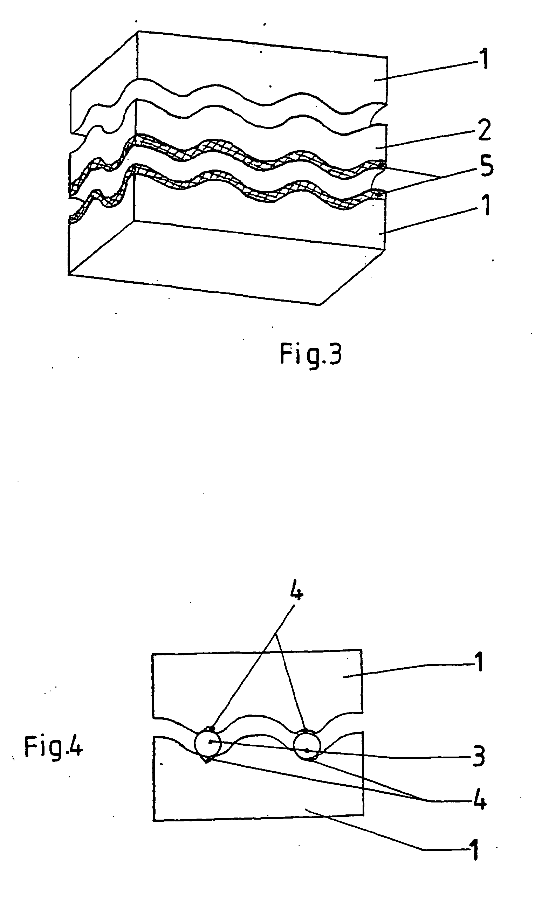

Beim Ausführungsbeispiel gemäß Figur 3 sind mehrere Teilkörper 1, 2 aufeinander gefügt, wobei jeweils zwischen den benachbarten Flächen die entsprechenden Labyrinthe, Wellen oder dergleichen Mäander ausgebildet sind. Ein entsprechender Wellenverlauf kann auch quer zur Durchsteckrichtung eines Kabels 3 oder dergleichen verlaufen, so dass Wellentäler und -berge gebildet sind, die Anhaltspunkte für das Einlegen von Kabeln bilden.

Insbesondere kann auch vorgesehen sein, dass benachbarte Wellen, Labyrinthe und/oder Mäander in einer Schnittebene und/oder in aufeinander folgenden Schnittebenen unterschiedliche Form, Wellenlänge, Wellentiefe, Wellenhöhe, Wellenbreite oder Länge aufweisen.

Wie in Figur 4 verdeutlicht, sind bei den quer zur Steckrichtung von Kabeln oder dergleichen ausgerichteten Querwellen in der Schnittebene der Teilkörper 1, 2 im Tal dieser Wellen beziehungsweise im Berg der komplementären Querwellen Nuten 4 ausgeformt, in die entsprechende Kabel eingelegt werden können, so dass eine Vormontagehilfsposition für den Montierenden gebildet ist.

Die Teilkörper 1, 2 können unterschiedliche Härte aufweisen. Vorzugsweise bestehen die Teilkörper 1, 2 aus elastischem Werkstoff, beispielsweise Elastomermaterial. Beim Ausführungsbeispiel gemäß Figur 3 ist verdeutlicht,dass die Teilkörper 1, 2 aus hartem Werkstoff bestehen und lediglich in der Schnittebene eine weichelastische Schicht 5 vorgesehen ist, die einseitig oder beidseitig an den einander zugewandten Flächen vorgesehen ist. Eine solche Schicht kann beispielsweise im Wege des Zweikomponentenspritzverfahrens an den jeweiligen Teilkörper 1 beziehungsweise 2 angeformt sein. Es ist aber auch möglich, die Schicht als separates Element auszubilden und gegebenenfalls mit dem Teilkörper 1, 2 zu verkleben.

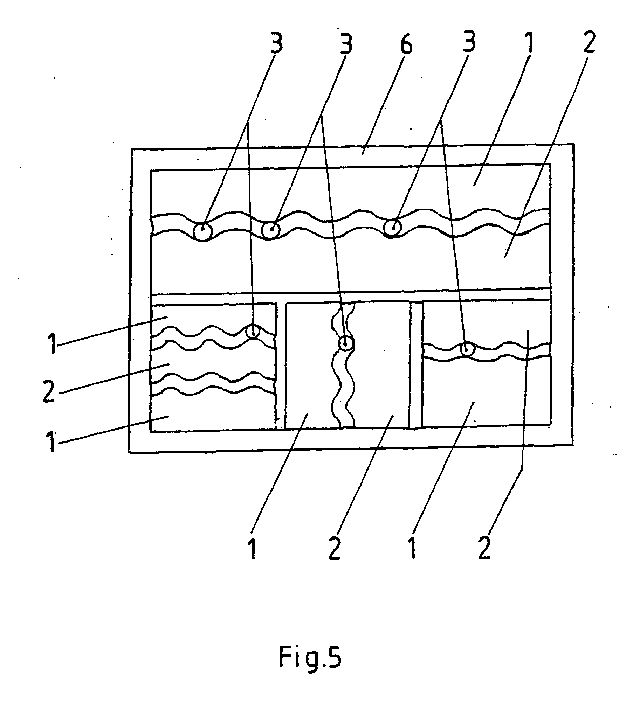

Bei der Ausführungsform gemäß Figur 5 ist verdeutlicht, dass mehrere Dichtkörper mit jeweils Teilkörpern 1, 2 von einem Spannrahmen 6 oder einer anderen Spanneinrichtung umgeben sind, mittels derer die die Schnittebene bildenden Flächen der Teilkörper 1, 2 gegeneinander anpressbar sind, wenn die entsprechenden Kabel 3 oder dergleichen verlegt sind. Die Spanneinrichtung ist an dem Rahmen 6 nicht gezeigt, jedoch ist die Ausbildung eines solchen Spannrahmens an sich im Stand der Technik bekannt und in ähnlicher Form beispielsweise in der DE 94 14 666 U1 gezeigt. Der Spannrahmen 6 kann dabei in der Lage gemäß Figur 5 vertikal und/oder auch horizontal zum Anspannen der Teilkörper 1, 2 der Dichtkörper ausgerüstet sein.

Die Erfindung ist nicht auf das Ausführungsbeispiel beschränkt, sondern im Rahmen der Offenbarung vielfach variabel.

## Patentansprüche

1. Dichtkörper für Kabeldurchführungen, bestehend aus mindestens zwei Teilkörpern (1, 2), wobei die Teilkörper (1, 2) massiv sind und mit den einander zugewandten Flächen aufeinander liegen, wobei die so gebildete Schnittebene die Durchsteckebene für Kabel (3) oder dergleichen flexible Langformteile bildet, wobei die die Schnittebene bildenden Flächen wellenartig und/oder mäanderartig und/oder ein Labyrinth bildend geformt und passend ineinander gefügt sind, wobei der Wellenverlauf und/oder Mäanderverlauf etwa gleichgerichtet zur geraden Durchsteckrichtung von Kabeln (3) oder dergleichen Langformteilen gerichtet ist, darduch gekennzeichnet, dass die Schnittebene bildenden Flächen eine Zugentlastung bilden, indem die zwischen den Teilkörpern (1,2) angeordneten Kabel (3) oder dergleichen Langformteile beim Aneinanderpressen der Teilkörper (1,2) entsprechend des Wellenverlaufes, des Mäanderverlaufes oder des Labyrinthverlaufes verformt werden, so dass sie sich in Zugrichtung einer auf das Kabel (3) oder dergleichen Langformteil einwirkenden Zugkraft nicht gradlinig erstrecken, sondern gewellt oder abgewinkelt verlaufen.

2. Dichtkörper nach Anspruch 1, **dadurch gekennzeichnet, dass** der Wellenverlauf und/oder Mäanderverlauf parallel zur Durchsteckrichtung gerichtet ist.

3. Dichtkörper nach Anspruch 1 und/oder 2, **dadurch gekennzeichnet, dass** der Wellenverlauf und/oder Mäanderverlauf schräg, insbesondere diagonal zur Durchsteckrichtung gerichtet ist.

4. Dichtkörper nach einem der Ansprüche 1 bis 3, **dadurch gekennzeichnet, dass** mehrere Teilkörper (1, 2) aufeinander gefügt sind, wobei jeweils zwischen den benachbarten Flächen Labyrinthe, Wellen und/oder Mäander ausgebildet sind.

5. Dichtkörper nach einem der Ansprüche 1 bis 4, **dadurch gekennzeichnet, dass** benachbarte Wellen, Labyrinthe und/oder Mäander in einer Schnittebene und/oder in aufeinander folgenden Schnittebenen unterschiedliche Form, Wellenlänge, Tiefe, Höhe, Breite oder Länge aufweisen.

6. Dichtkörper nach einem der Ansprüche 1 bis 5, **dadurch gekennzeichnet, dass** quer zur Steckrichtung von Kabeln (3) oder dergleichen Langformteilen/Querwellen in der Schnittebene der Teilkörper (1, 2) gebildet sind und vorzugsweise im Tal und/oder auf dem Berg einer Querwelle in Durchsteckrichtung der Kabel (3) verlaufende Nuten (4) ausgeformt sind.

7. Dichtkörper nach einem der Ansprüche 1 bis 6, **dadurch gekennzeichnet, dass** die Teilkörper (1, 2) unterschiedliche Härte aufweisen.

8. Dichtkörper nach einem der Ansprüche 1 bis 7, **dadurch gekennzeichnet, dass** die Teilkörper (1, 2) aus elastischem Werkstoff, vorzugsweise Elastomer bestehen.

9. Dichtkörper nach einem der Ansprüche 1 bis 8, **dadurch gekennzeichnet, dass** die Dichtkörper aus hartem Werkstoff bestehen und in der Schnittebene eine weichelastische Schicht (5) einseitig oder beidseitig an den einander zugewandten Flächen der Teilkörper (1, 2) vorgesehen ist.

## Claims

1. A sealing member for cable feed-throughs, having at least two partial bodies (1, 2), the partial bodies (1, 2) being solid and lying on top of each other with the surfaces that are facing each other, the thus formed section plane being the feed-through plane for cables (3) or similar flexible oblong parts, the surfaces forming the section plane being formed in a wave shape and/or in a meander shape and/or forming a labyrinth and being joined into each other, the wave shape and/or the meander shape being directed approximately parallel to the straight feed-through direction of cables (3) or similar oblong parts, **characterized by** that the surfaces forming the section plane form a strain relief by that the cables (3) or similar oblong parts arranged between the partial bodies (1, 2) are deformed according to the wave shape, the meander shape or the labyrinth shape when the partial bodies (1, 2) are pressed together, such that in the direction of a traction force acting on the cable (3) or similar oblong part, they will not extend in a straight line, but rather in a wave line or with an angle.

2. The sealing member according to claim 1, **characterized by** that the wave shape and/or meander shape are in parallel alignment with the feed-through direction.

3. The sealing member according to claim 1 and/or 2, **characterized by** that the wave shape and/or meander shape is directed obliquely, in particular diagonally to the feed-through direction.

4. The sealing member according to one of claims 1 to 3, **characterized by** that several partial bodies (1, 2) are joined on top of each other, between the adjacent surfaces respectively labyrinths, waves and/or meanders being formed.

5. The sealing member according to one of claims 1 to 4, **characterized by** that adjacent waves, labyrinths and/or meanders in one section plane and/or in consecutive section planes have different shapes, wavelengths, depths, heights, widths, or lengths.

6. The sealing member according to one of claims 1 to 5, **characterized by** that transversely to the insertion direction of cables (3) or similar oblong parts, transverse waves are formed in the section plane of the partial bodies (1, 2), and preferably in the valley and/or on the peak of a transverse wave, grooves (4) extending in the feed-through direction of the cables (3) are formed.

7. The sealing member according to one of claims 1 to 6, **characterized by** that the partial bodies (1, 2) have different hardnesses.

8. The sealing member according to one of claims 1 to 7, **characterized by** that the partial bodies (1, 2) are made of an elastic material, preferably an elastomer.

9. The sealing member according to one of claims 1 to 8, **characterized by** that the sealing members are made of a hard material, and that in the section plane a soft-elastic layer (5) is provided on one side or on both sides of the surfaces of the partial bodies (1, 2) facing each other.

## Revendications

1. Corps d'étanchéité pour traversées de câble, ayant au moins deux corps partiels (1, 2), ces corps partiels (1, 2) étant pleins et superposés l'un sur l'autre avec les surfaces en vis-à-vis, le plan de coupe ainsi formé étant le plan d'introduction pour des câbles (3) ou pièces flexibles en forme allongée similaires, les surfaces formant le plan de coupe étant réalisées en forme d'ondes et/ou en forme de méandres et/ou en forme d'un labyrinthe et étant jointes l'une dans l'autre de manière ajustée, la forme d'onde et/ou la forme de méandre s'étendant dans le même sens que la direction d'introduction rectiligne de câbles (3) ou de pièces en forme allongée similaires, **caractérisé en ce que** les surfaces formant le plan de coupe forment un dispositif anti-traction par ce que les câbles (3) ou les pièces en forme allongée similaires situés entre les corps partiels (1, 2) sont déformés selon la forme d'onde, la forme de méandre ou la forme de labyrinthe quand les corps partiels (1, 2) sont comprimés l'un contre l'autre, de façon que dans la direction d'une force de traction agissant sur le câble (3) ou une pièce en forme allongée similaire, ils ne s'étendent pas en ligne droite, mais en ligne ondulée ou à un angle.

2. Corps d'étanchéité selon la revendication 1, **caractérisé en ce que** la forme d'onde et/ou la forme de méandre sont en alignement parallèle à la direction d'introduction.

3. Corps d'étanchéité selon la revendication 1 et/ou 2, **caractérisé en ce que** la forme d'onde et/ou la forme de méandre est orientée obliquement, en particulier diagonalement à la direction d'introduction.

4. Corps d'étanchéité selon une des revendications 1 à 3, **caractérisé en ce que** plusieurs corps partiels (1, 2) sont joints l'un sur l'autre, entre les surfaces adjacentes respectivement des labyrinthes, ondes et/ou méandres étant formés.

5. Corps d'étanchéité selon une des revendications 1 à 4, **caractérisé en ce que** des ondes, labyrinthes et/ou méandres adjacents dans un plan de coupe et/ou dans des plans de coupe successifs ont des formes, longueurs d'ondes, profondeurs, hauteurs, épaisseurs ou longueurs différentes.

6. Corps d'étanchéité selon une des revendications 1 à 5, **caractérisé en ce que** transversalement à la direction d'insertion de câbles (3) ou de pièces en forme allongée similaires, des ondes transversales sont formées dans le plan de coupe des corps partiels (1, 2), et de préférence dans le creux et/ou au sommet d'une onde transversale, des rainures (4) s'étendant dans la direction d'introduction des câbles (3) sont formées.

7. Corps d'étanchéité selon une des revendications 1 à 6, **caractérisé en ce que** les corps partiels (1, 2) ont des duretés différentes.

8. Corps d'étanchéité selon une des revendications 1 à 7, **caractérisé en ce que** les corps partiels (1, 2) sont en une matière élastique, de préférence un élastomère.

9. Corps d'étanchéité selon une des revendications 1 à 8, **caractérisé en ce que** les corps d'étanchéité sont en une matière dure, et que dans le plan de coupe, une couche souple (5) est prévue sur un côté ou sur les deux côtés des surfaces des corps partiels (1, 2) étant en vis-à-vis.
